(19) Europäisches Patentamt
European Patent Office
Office européen des brevets

(11) **EP 4 108 301 B1**

(12) **EUROPEAN PATENT SPECIFICATION**

(45) Date of publication and mention
of the grant of the patent:
**14.08.2024 Bulletin 2024/33**

(21) Application number: **21201184.5**

(22) Date of filing: **06.10.2021**

(51) International Patent Classification (IPC):
**A63B 24/00** *(2006.01)* **A63B 21/062** *(2006.01)*
**A63B 21/00** *(2006.01)* **A63B 71/06** *(2006.01)*

(52) Cooperative Patent Classification (CPC):
**A63B 24/0003; A63B 21/0628; A63B 21/4035;
A63B 71/0619;** A63B 2220/833; A63B 2225/02

(54) **SYSTEMS AND METHODS FOR RETROFITTING EXERCISE MACHINES WITH SMART FUNCTIONS**

SYSTEME UND VERFAHREN ZUM NACHRÜSTEN VON ÜBUNGSGERÄTEN MIT INTELLIGENTEN FUNKTIONEN

SYSTÈMES ET PROCÉDÉS DE RÉNOVATION DE MACHINES D'EXERCICE AVEC DES FONCTIONS INTELLIGENTES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.06.2021 US 202117358305**

(43) Date of publication of application:
**28.12.2022 Bulletin 2022/52**

(73) Proprietor: **Wistron Corporation
New Taipei City 22181 (TW)**

(72) Inventors:
• **LIAO, Hsin-Hui
22181 New Taipei City (TW)**

• **CHENG, Yi-Hsuan
22181 New Taipei City (TW)**
• **CHIU, Chih-Hao
22181 New Taipei City (TW)**
• **CHEN, Tai-Yun
22181 New Taipei City (TW)**

(74) Representative: **Viering, Jentschura & Partner mbB
Patent- und Rechtsanwälte
Am Brauhaus 8
01099 Dresden (DE)**

(56) References cited:
**US-A1- 2020 179 753 US-A1- 2020 245 900
US-B1- 9 414 784**

**Description**

**BACKGROUND**

The present invention relates generally to the field of smart exercise machines, and, more particularly, to systems and methods for retrofitting exercise machines with smart functions.

Conventional exercise machines, particular those used for strength training in fitness centers or rehabilitation facilities, provides physical exercises for various parts of our body through repetitive movements. However, the conventional exercise machines lack monitoring and feedback functions, thus a fitness coach is often needed on site to track an exercise session and to provide guidance to a user. This is both costly and often time not practical.

On the other hand, the conventional exercise machines are a big investment and still perfectly usable to facilitate exercises. As such, what is desired is systems and methods to retrofit the conventional exercise machines with smart functions. US 9 414 784 B1 discloses a known system.

**SUMMARY**

According to the present invention, a physical exercise system as defined by claim 1 is provided. A method according to the present invention is defined in claim 9. The dependent claims show some examples of such a system and method, respectively. A method for retrofitting exercise machines includes removably attaching a sensor module to a moving part of an exercise machine, the sensor module being configured to detect rotations of the moving part and transmit the detected data by a wireless communication connection with a control module, the control module being configured to receive the detected data, calculate an angle value using the detected data and transmit the angle value by a wireless communication connection, providing a cloud-based application server remote to the exercise machine, the cloud-base application server being configured to receive the angle value via the wireless communication connection, verify a user, produce packets of data based on the angle value and the verified user information and transmit the packets of data to a display device, and affixing an identification code to the exercise machine, the identification code being linked to the cloud-based application server. A retrofitted exercise machine system is further disclosed.

**BRIEF DESCRIPTION OF THE DRAWING**

Fig. 1 is a block diagram of a system for retrofitting conventional exercise machines according to an embodiment of the present invention.

Fig. 2 illustrates an angle calculation method performed by the processing unit in the control module of Fig. 1.

Fig. 3 is a flowchart illustrating a process of detecting completeness of a workout repetition according to an embodiment of the present invention.

Figs. 4A-4C illustrate various locations the sensor modules are attached to different exercise machines.

Fig. 5 is a flowchart illustrating a process of retrofitting an exercise machine with the smart system according to one embodiment of the present invention.

Fig. 6 is a flowchart illustrating a process of using the retrofitted smart exercise machine.

Fig. 7 is a flowchart illustrating a calibration process for a retrofitted exercise machine.

Fig. 8 is a flowchart illustrating a process of detecting angles by the control module.

Fig. 9 is a flowchart illustrating a process of determining a speed range of each motor speed level according to embodiments of the present invention.

Fig. 10 is a flowchart illustrating a process of detecting motor speed levels during a workout session according embodiments of the present invention.

Fig. 11 is a measurement plot of angular acceleration vs. time.

Fig. 12 is a block diagram illustrating a retrofitted smart exercise machine system with two control modules separately controlling their respective exercise machines.

Fig. 13 is a block diagram illustrating a retrofitted smart exercise machine system with two exercise machines sharing one big screen display.

Fig. 14 is a block diagram illustrating a retrofitted smart exercise machine system with two exercise machines sharing one control module.

Figs. 15A and 15B are flowcharts illustrating data flow during a user's exercise session on the retrofitted smart exercise machine system of the present invention.

Figs. 16A-16D illustrate exemplary training results vs. training guidance.

The drawings accompanying and forming part of this specification are included to depict certain aspects of the invention. A clearer conception of the invention, and of the components and operation of systems provided with the invention, will become more readily apparent by referring to the exemplary, and therefore non-limiting, embodiments illustrated in the drawings, wherein like reference numbers (if they occur in more than one view) designate the same elements. The invention may be better understood by reference to one or more of these drawings in combination with the description presented herein.

**DESCRIPTION**

The present invention relates to retrofitting conventional exercise machines with smart functions. Preferred embodiments of the present invention will be described hereinafter with reference to the attached drawings.

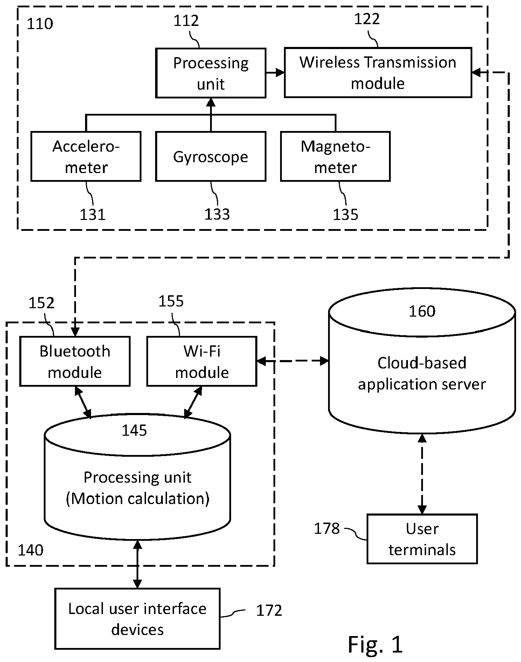

Fig. 1 is a block diagram of a system for retrofitting conventional exercise machines according to an embodiment of the present invention. The retrofitting system includes a sensor module 110, a control module 140, a cloud-based application server 160, local user interface devices 172 and remote user terminals 178. The sensor module 110 is to be mounted on a moving part of a designated exercise machine by a specially designed fixture, such as a clip or a magnet, to detect motions of the machine part. As the sensor module 110 is removable, the sensor module 110 can also be secured to a user's body part by an exemplary strap to detect body movements directly. In an embodiment, the senor module 110 includes an accelerometer 131, a gyroscope 133, a magnetometer 135, a processing unit 112 and a wireless transmission module 122. The accelerometer 131, the gyroscope 133, and the magnetometer 135 together can detect the exercise machine part's linear distance and angle of movement. The processing unit 112 collects data sampled by the accelerometer 131, the gyroscope 133, and the magnetometer 135 and transforms the sampled raw data into acceleration, angular acceleration, magnetic value and quaternion data for being transmitted by the wireless transmission module 122. In an embodiment, the wireless transmission module 122 is implemented with Bluetooth technology and the data transmission is in packet form. However, other wireless transmission technologies, such as infrared communication, broadcast radio, microwave communication, mobile communication and Wi-Fi communication, may also be used to implement the wireless transmission module 122.

When an exercise machine has multiple moving parts, multiple sensor module 110 may be used, so that each moving part has its own sensor module 110. In addition, a typical fitness facilities may have multiple exercise machines, and every machine may have its own set of sensor modules 110. In order to identify each sensor module 110, an identification number may be assigned to it. The identification number may be set by the factory and can be read out by the control module 140, or can be dynamically written into an internal storage device of the control module 140 or into an external storage device of the control module 140. The control module 140 wirelessly communicates with multiple sensor modules 110 through Bluetooth technology, so as to respectively assign the identification numbers to the sensor modules 110.

Referring again to Fig. 1, the control module 140 includes a processing unit 145, a Bluetooth module 152, and an exemplary Wi-Fi module 155. The Bluetooth module 152 and the wireless transmission module 122 of the sensor module 110 establish a wireless communication connection for receiving data from and transmitting commands to the sensor module 110. The control module 140 may store data (e.g., the receiving data from the sensor module 110) and commands (e.g., the to-be-transmitted commands for the sensor module 110) into an internal storage device or an external storage device. The internal storage device is inside the control module 140. The external storage device is outside the control module 140. The Wi-Fi module 155 is used to wirelessly communicates the control module 140 with the cloud-based application server 160 through the Internet. In an embodiment, a single wireless communication module can be used in place of both the Bluetooth module 152 and the Wi-Fi module 155. In such case, the control module 140 communicates with both the sensor module 110 and the cloud-based application server 160 using Wi-Fi technology.

The control module 140 is exemplarily placed on a ground near yet separated from the exercise machine or placed on the exercise machine. A control module 140 may be associated with one exercise machine or multiple exercise machines depending on a number of sensor modules 110 the exercise machines have. In a large fitness facility where multiple exercise machines may be scattered in different rooms, multiple control modules 140 may be used. In this case, a local computer (not shown) may be used to control and communicate with the multiple control modules 140 through either wireless Bluetooth or ethernet cables. The local computer serves as a gateway to communicate with the cloud-based application server 160.

The processing unit 145 receives the acceleration, angular acceleration, magnetic value and quaternion data from the sensor module 110, and calculates an angle of rotation and angular acceleration of a corresponding machine part based on the received data. In addition, the processing unit 145 also detects a speed range of the corresponding machine part based on the received data. The angle of rotation, the angular acceleration and the speed range are then transmitted to the cloud-based application server 160 through the exemplary Wi-Fi module 155.

As shown in Fig. 1, the processing unit 145 is also coupled to local user interface devices 172, such as a display with touch sensing inputs. A user can sign up or log into his or her account through the local user interface devices 172. For such purposes, the local user interface devices 172 may have a touch sensing screen as well as a QR code scanner, a card reader and/or a wearable device sensor. Once logged in, the local user interface devices 172 allows the user to instantly monitor his or her workout characteristics, such as range of motion and cadence, etc. These characteristics may be compared with predetermined targets. The local user interface devices 172 also allows the user to set the targets or acquiring training programs from the cloud-base application server 160. As such, each exercise machine may associate with a local user interface device 172 placed nearby for individual use. The local user interface device 172 may also include a large display and associate with multiple exercise machines to facilitate group workouts.

Referring again to Fig. 1, the cloud-based application server 160 serves as a management platform for the smart exercise machine system according to embodiments of the present invention. The management platform provides a website that is hosted by a cloud service providers, such as Amazon Web Services and Microsoft Azure Cloud Provider, etc. The website can be accessed by the user terminals 178 from anywhere with an Internet connection. The website offers numerous training and management operations, such as real-time coaching, series of classes, training information dashboard, trainee's training records, training organizing and planning, administrator's access, facility management, machine management, and agent management, etc. As an example, the real-time training guidance can stream video and/or audio content to the local user interface devices 172, so that the user can follow a selected workout routine. At the same time, the corresponding sensor module 110 can monitor the user's performance in real-time for comparing with the selected workout routine. Then the user interface devices 172 displays progresses by the user, such as how many repetitions the user has performed and how many to go.

The cloud-based application server 160 may also host user account records accessible through the website. The user account records may store user's contact information, training logs, physical fitness test records, personal profiles, user sign-in information and user's biometric data. In addition, the cloud-based application server 160 may provide a web portal for facility management personnel, so that they can monitor the machine usages and coaching activities.

In embodiments, the cloud-based application server 160 may be linked to users' social media accounts, such as LINE accounts, so that their fitness activities can be shared through social media; family members can monitor their workouts in real time; and their training and coaching records can be easily accessed. By linking to social media accounts, the users can also talk to or share video with each other during exercise. In addition, family members can access a user's physical fitness record and biometric data through the social media account.

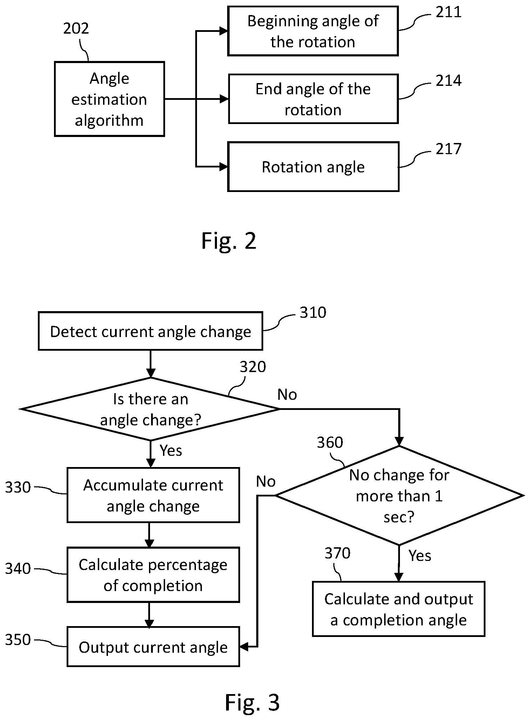

Fig. 2 illustrates an angle calculation method performed by the processing unit 145 in the control module 140. The angle estimation algorithm 202 uses the acceleration, angular acceleration, magnetic value and quaternion data from the sensor module 110 to calculate the turning angle of a corresponding machine part. From the calculated turning angle, an angle position of the beginning rotation 211, an angle position of the end rotation 214 and a rotation angle 217 are obtained.

The angle position of the beginning rotation 211 and the angle position of the end rotation can be calculated from the quaternion data. If the axis of rotation around the quaternion is a normalized vector $(a_x, a_y, a_z)$, the rotation angle is $\theta$, then the $(w, x, y, z)$ component of the quaternion is: $(a_x \cdot \sin(\theta/2), a_y \cdot \sin(\theta/2), a_z \cdot \sin(\theta/2), \cos(\theta/2))$.

The rotation angle can be calculated from the angular acceleration data by an equation: Angle = V * T, where V is a current angular acceleration value, and T is a sample rate of the sensor module 110. As an example, T is set at 200 ms. In addition, the equation is stored in an internal storage device of the control module 140 or in an external storage device of the control module 140.

In an embodiment, a nine-axis sensor module may be used to detect three-axis acceleration, three-axis angular acceleration, three-axis magnetic value and quaternion data. The quaternion data is derived from the acceleration, the angular acceleration, and the magnetic value data. Below Table illustrates relationships of these measurement data.

Table I

| Type | Data | Unit |
|---|---|---|
| 3-axis angular acceleration | X-axis angular acceleration | Radian/sec$^2$ |
| | Y-axis angular acceleration | Radian/sec$^2$ |
| | Z-axis angular acceleration | Radian/sec$^2$ |
| Quaternion | a + bi + cj + dk | $i^{2} = j^{2} = k^{2} = i*j*k = -1$ |

From the angle calculation result, completeness of a workout repetition can be derived. The completeness is defined as a ratio or percentage of the actual rotation angle to a predetermined maximum rotation angle for a particular machine part. The predetermined maximum rotation angle is stored in either the control module 140 or the cloud-based application server 160.

Fig. 3 is a flowchart illustrating a process of detecting completeness of a workout repetition according to an embodiment of the present invention. The process begins with block 310 where current angle change is detected. In block 320, the detection result is evaluated. If there is an angle change, the process enters block 330 where the current angle change is accumulated. In subsequent block 340, a percentage of completion is calculated. In block 350, the current angle is outputted to either the local user interface devices 172 or the cloud-based application server 160 in real time, or both in real time.

Back to block 320, if there is no angle change, the process starts a timer in block 360. If the timer expires after a predetermined time, for instance, 1 second, there is still no angle change being detected, the process enters block 370 where a completion angle is calculated and outputted to either the local user interface devices 172 or the cloud-based application server 160 in real time, or both in real time.

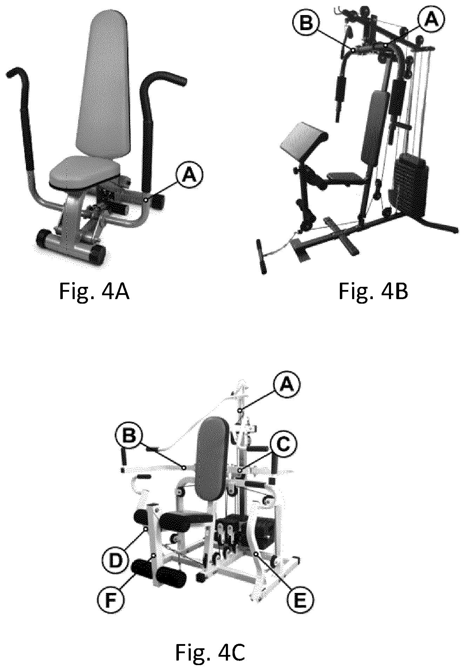

Figs. 4A-4C illustrates various locations the sensor modules 110 are attached to different exercise machines. Referring to Fig. 4A, for a simple arm press machine on which both arms move synchronously, only one sensor module 110 is needed to be mounted at location A which reflects angular changes of a handle.

Referring to Fig. 4B, for a chest expansion machine, as the left and right arm may move asynchronously, two sensor modules 110 are needed with one mounted at location A on a left arm part and the other mounted at location B on a right arm part.

Referring to Fig. 4C, a combinational machine has multiple moving parts, multiple sensor modules 110 are mounted at locations A, B, C, D, E, and F, each corresponds to a moving part.

During a setup process, each sensor module 110 is identified by an identification number or code and associated with the exercise machine the sensor module 110 is mounted to.

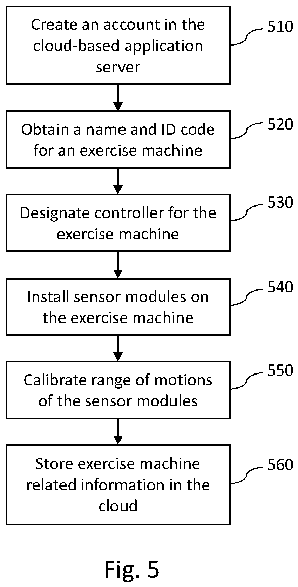

Fig. 5 is a flowchart illustrating a process for retrofitting an exercise machine with the smart system of the present invention. The retrofitting process begins with block 510 where a purchaser first creates an account in the cloud-based application server 160. After signing up, in block 520, the purchaser obtains a name and identification code for a particular exercise machine that is intended to be retrofitted with the smart functions. In block 530, a control module 140 is designated to the exercise machine. The control module 140's universal unique identifier (UUID) is then provided to the cloud-based application server 160. In block 540, sensor modules 110 are installed on the exercise machine. Identification number or code of each of the installed sensor modules 110 are obtained and provided to the cloud-based application server 160. In block 550, range of motions of the installed sensor modules are calibrated. In addition, the range of motions of the installed sensor modules are stored in an internal storage device of the control module 140 or in an external storage device of the control module. The calibration includes detecting and recording a starting angle and an end angle. In block 560, information relates to the retrofitted exercise machine, such as the facility identification, the machine identification, the control module 140's UUID and the sensor module 110's starting angle and end angle, are stored in the cloud-base application server 160.

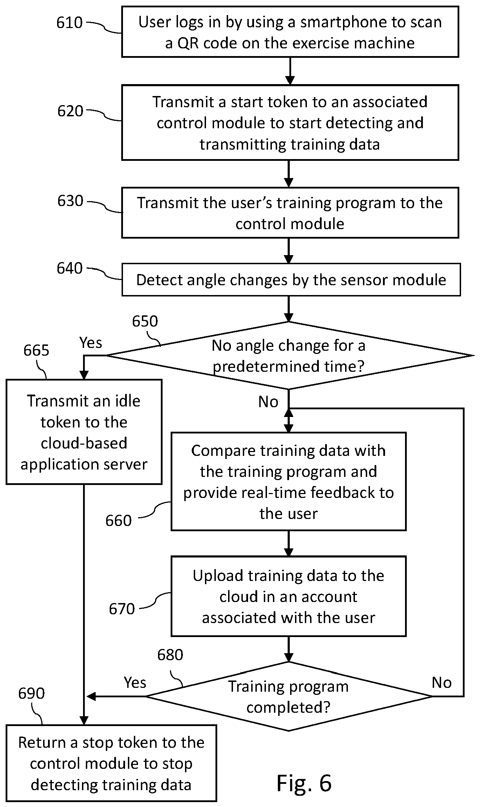

Fig. 6 is a flowchart illustrating a process of using a retrofitted smart exercise machine. To begin using the smart exercise machine, a user uses his or her smartphone to scan a quick response (QR) code or universal product code (UPC) affixed on the exercise machine in block 610. The log-in process also include transmitting the user identity information along with the exercise machine's identification code to the cloud-based application server 160. If the user is not a registered customer, and the cloud-based application server 160 does not recognize the user, then the smart functions will not be activated, so the user can only use the exercise machine as a conventional one. If the user is a registered customer, then the cloud-based application server 160 transmits a start token to a control module 140 associated with the exercise machine to start detecting and transmitting training data in block 620. Upon request, the cloud-based application server 160 also transmits a prestored training program for the user to the control module 140 in block 630. In block 640, the control module 140 detects angle changes as a result of the user's workout by the sensor module 110. In block 650, a timer tracks time durations of angle changes. If there is no angle change for a predetermined time, for instance 10 minutes, the control module 140 transmits an idle token to the cloud-based application server 160 in block 665. Upon receiving the idle token, the cloud-based application server 160 returns a stop token to the control module 140 to stop further detecting training data in block 690. On the other hand, if the angle changes during the predetermined time duration, meaning that the user is still working out on the exercise machine, the control module 140 compares the detected training data with the training program and provide real-time feedback to the user on the local user interface devices 172 in block 660. The control module 140 also uploads the training data to the cloud-based application server 160 in an account associated with the user in block 670. In block 680, the control module checks if the training program is completed? If completed, the training session ends and cloud-based application server 160 performs block 690. Otherwise, the training process returns to block 660.

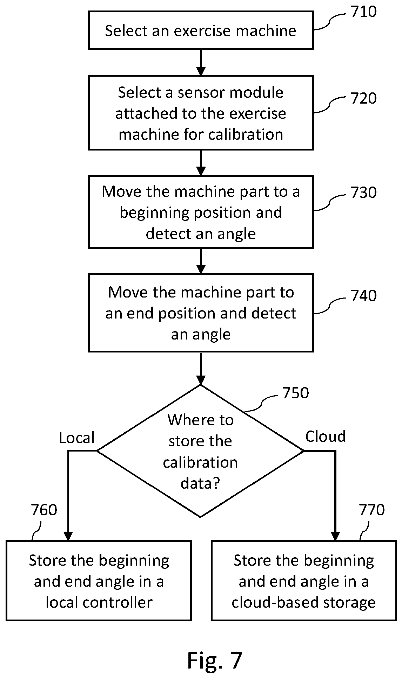

Fig. 7 is a flowchart illustrating a calibration process for a retrofitted exercise machine. The calibration process begins with selecting an exercise machine in block 710. Then select a sensor module 110 that is attached to a moving part of the exercise machine for calibration in block 720. In block 730, the moving part is moved to a beginning position and an angle is detected. In block 740, the moving part is moved to an end position and an angle is detected again. In block 750, the operator is prompted to select where to store the calibration data? If "local" is selected, the beginning and end angle are then stored in the local control module 140 (i.e. block 760). The control module 140 may have a respective storage device. If "cloud" is selected instead, the beginning and end angle are then stored in the cloud-based application server 160 (i.e. block 770). In another embodiment, the beginning and end angle are stored in both the local control module 140 and the cloud-based application server 160. In yet another embodiment, the beginning and end angle are first stored in the local control module 140, and then optionally stored in the cloud-based application server 160.

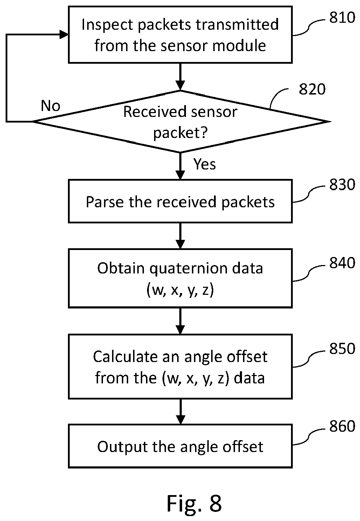

Fig. 8 is a flowchart illustrating a process of detecting angles by the control module 140. In block 810, the control module 140 inspects packets transmitted from the sensor module 110. In block 820, if no sensor packet is received, the control module 140 keep inspecting the incoming packets in block 810; if sensor packets are received, the control module 140 parse the received packets in block 830, and obtain quaternion data (w, x, y, z) from the sensor packets in block 840. In block 850, the control module calculates an angle offset. In block 860, the calculated angle offset is outputted to the cloud-based application server 160 or the local user interface devices 172 or both.

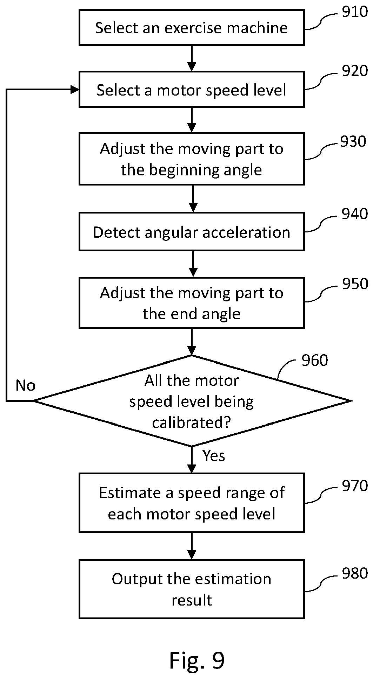

Fig. 9 is a flowchart illustrating a process of determining a speed range of each motor speed level according to embodiments of the present invention. In block 910, an operator selects an exercise machine to be calibrated. In block 920, a motor speed level is selected. In block 930, the operator adjusts a moving part of the exercise machine to its beginning angle. In block 940, the control module 140 detects angular acceleration of the moving part. In block 950, the operator adjusts the moving part to its end angle. In block 960, after the calibration for one speed level is completed, the process goes back to block 920 to perform calibration for another speed level until all the speed levels are calibrated. In block 970, the control module estimates a speed range of each motor speed level. In block 980, the estimated result is outputted to the local user interface devices 172. If selected, the estimated result is further outputted to the cloud-based application server 160.

Table II shows an exemplary result of motor speed level vs speed range. In this case, there are six motor speed level corresponding to six speed ranges each with a maximum speed and a minimum speed.

Table II

| Motor speed level | Minimum speed | Maximum speed |
|---|---|---|
| Level 1 | Lv1_min | Lv1_max |
| Level 2 | Lv2_min | Lv2_max |
| Level 3 | Lv3_min | Lv3_max |
| Level 4 | Lv4_min | Lv4_max |
| Level 5 | Lv5_min | Lv5_max |
| Level 6 | Lv6_min | Lv6_max |

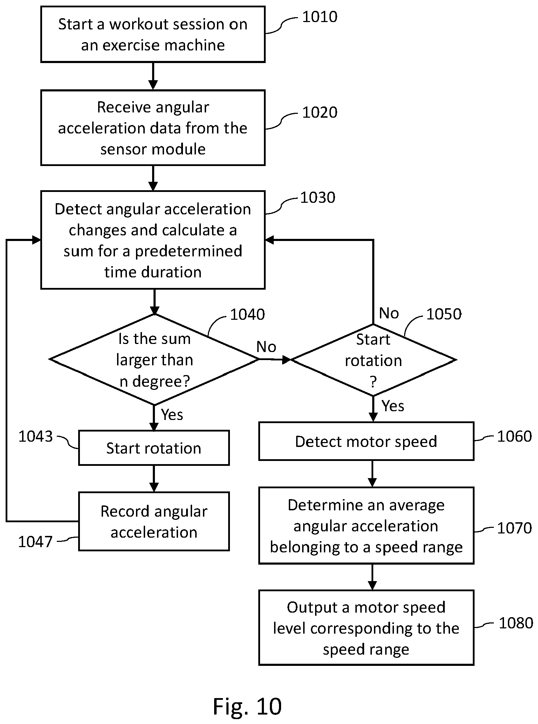

Fig. 10 is a flowchart illustrating a process of detecting motor speed levels during a workout session according embodiments of the present invention. In block 1010, a user starts a workout session on an exercise machine. In block 1020, the control module 140 receives angular acceleration data from the sensor module 110. In block 1030, the control module 140 detects angular acceleration changes and calculates a sum for a predetermined time duration, such as 1 second. In block 1040, if the sum is larger than n degree, where n is an empirical threshold value predetermined based on a sensibility of smart exercise machine, the process enters block 1043, where rotation is detected. In block 1047, angular acceleration is recorded and then return back to block 1030. If the sum is not larger than n degree, the process enters block 1050, i.e., when the exercise machine has not started operation, the process returns to block 1030; when the operation has started, the sensor module 110 detects motor speed in block 1060. When a stop is detected, the current motor rotation speed is calculated through a detecting motor speed algorithm. In block 1070, the control module 140 determines an average angular acceleration belonging to a speed range. In block 1080, the control module 140 outputs a motor speed level corresponding to the speed range to the cloud-based application server 160 or the local user interface devices 172 or both.

For an exercise machine used for rehabilitation, the detected angular acceleration during a rotation has two situations. In a first situation, the angular acceleration is caused by both a motor and a user's force. In a second situation, the angular acceleration is only caused by the motor. In order to correctly detect actual motor speed, the second situation has to be extracted from the first situation. In an embodiment, the actual motor speed is detected using following method.

$$\text{If } \delta_{angular\ acceleration\ within\ a\ second} > m \qquad \text{Equation (1)}$$

where, $\delta$ stands for standard deviation, and m is an empirical threshold value adjustable based on the sensitivity of the exercise machine, and when a start of rotation is detected, angular accelerations that satisfies Equation (1) at two time spots, t1 and t2, where a last measurement of the angular acceleration before the rotation stops takes place at t2, are detected and recorded. Then

$$Motor\ speed = \sum_{t1}^{t2} \frac{Accumulative\ angular\ accelerations}{(t2-t1+1)} \qquad \text{Equation (2)}$$

In addition, the equation (1) and the equation (2) are stored in an internal storage device of the control module 140 or an external storage device of the control module 140.

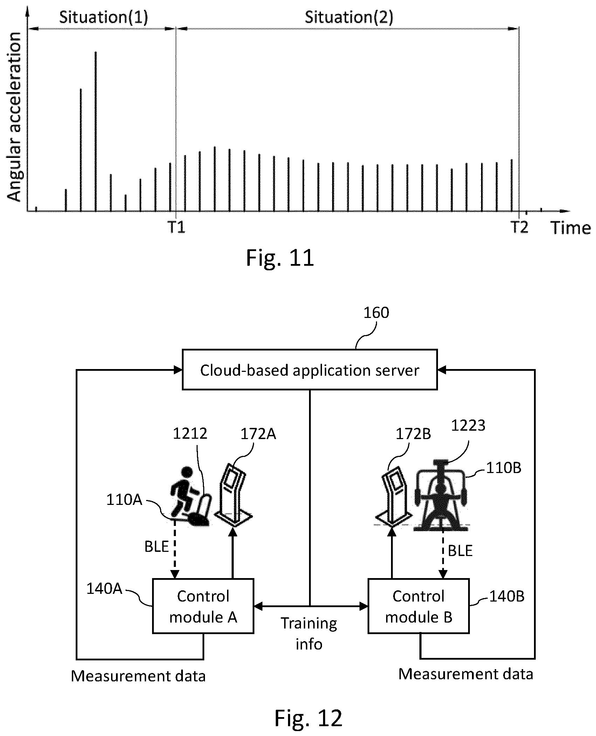

Fig. 11 is a measurement plot of angular acceleration vs. time. The measurement is performed on a retrofitted smart exercise machine having two independent sensor modules 110. Up to time T1, the angular acceleration measurements fluctuates dramatically, i.e., sequential measurements differ more than a predetermined threshold. This indicates that the exercise machine is in situation (1) where the angular acceleration is caused by both a motor and a user's force. For motor speed level detection, situation (1) is ignored. Between time T1 and T2, the angular acceleration measurement become smooth. This period is viewed as in situation (2) where the angular acceleration is only caused by the motor, and correct motor speed level can be detected. Equation (1) can be used to separate situation (2) from situation (1).

Fig. 12 is a block diagram illustrated a retrofitted smart exercise machine system with two control modules 140A and 140B separately controlling their respective exercise machines 1212 and 1223. An exemplary sensor module 110A is removably attached to the exercise machine 1212, and transmits sensor data to the control module 140A via a Bluetooth low energy (BLE) connection. The control module 140A calculates the sensor data into desired measurement data, such as angle values, and transmits the measurement data to the cloud-based application server 160 via a Wi-Fi connection. Based on the measurement data and prestored training programs, the cloud-based application server 160 returned training guidance information back to the control module 140A, which in turn displays the information on a local user interface device 172A. Similarly, an exemplary sensor module 110B is removably attached to the exercise machine 1223, and transmits sensor data to the control module 140B via a Bluetooth low energy (BLE) connection. The control module 140B calculates the sensor data into desired measurement data, such as angle values, and transmits the measurement data to the cloud-based application server 160 via a Wi-Fi connection. Based on the measurement data and prestored training programs, the cloud-based application server 160 returned training guidance information back to the control module 140B, which in turn displays the information on a local user interface device 172B.

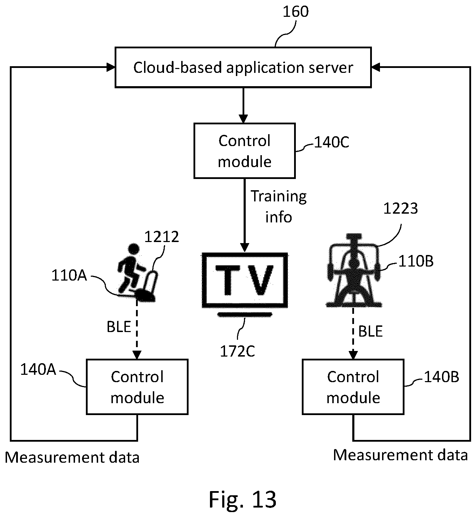

Fig. 13 is a block diagram illustrating a retrofitted smart exercise machine system with two exercise machines 1212 and 1223 sharing one big screen display. Different from the system shown in Fig. 12, the two exercise machines 1212 and 1223 of Fig. 13 do not have their own local user interface devices, instead they share a big screen local user interface device 172C which is controlled by a control module 140C. The control module 140C receives training guidance information for users of both exercise machines 1212 and 1223 from the cloud-based application server 160.

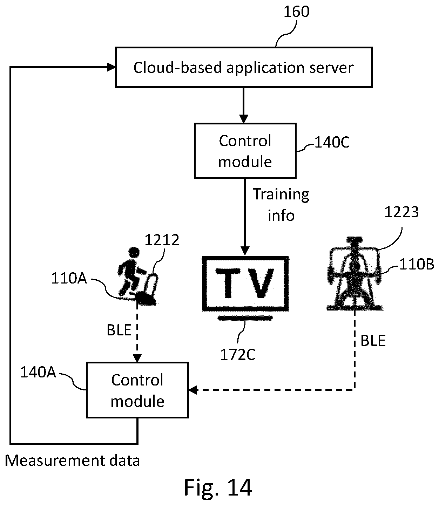

Fig. 14 is a block diagram illustrating a retrofitted smart exercise machine system with two exercise machines 1212 and 1223 sharing one control module 140A. Different from the system shown in Fig. 13, the two exercise machines 1212 and 1223 of Fig. 14 are placed near each other thus share a common control module 140A.

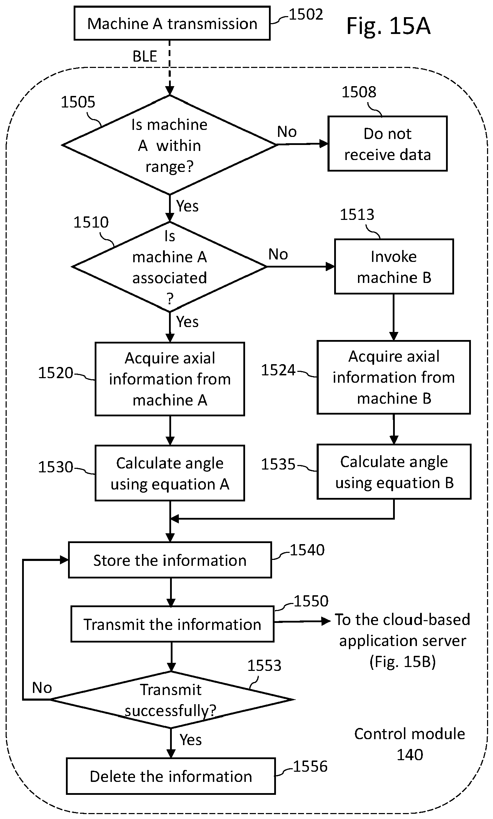

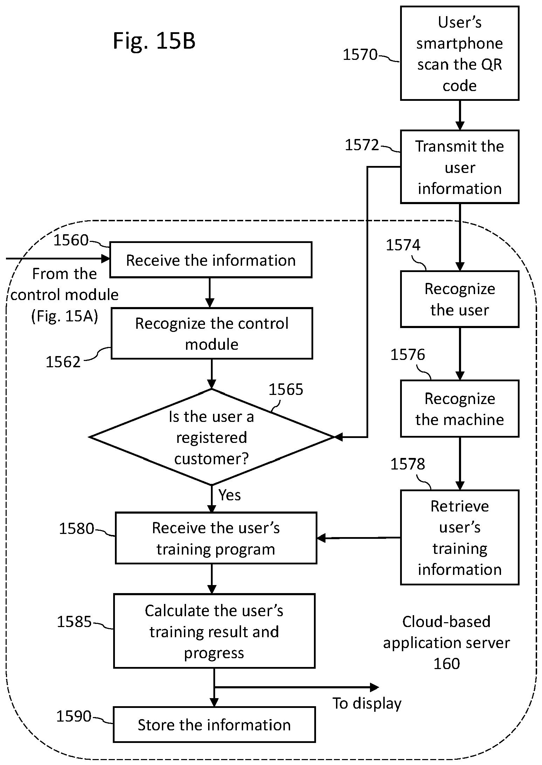

Figs. 15A and 15B are flowcharts illustrating data flow during a user's exercise session on the retrofitted smart exercise machine system of the present invention. Referring to Fig. 15A, in block 1502, when a user chooses machine A for workout, machine A transmits a signal. In block 1505, the control module 140 inquires if machine A that transmits the signal is within its range? If not, the control module 140 does not receive data in block 1508. If yes, the control module inquires if machine A is associated in block 1510. In block 1520, when machine A is associated with the control module 140, the control module 140 acquires axial information from machine A. In block 1530, the axial information is used to calculate angle using equation A which is associated with machine A. In block 1540, the calculated angle is stored, and in block 1550, transmitted to the cloud-based application server shown in Fig. 15B. In block 1553, the transmission is inspected. If successful, the angle information is deleted in block 1556; if not successful, the control module 140 goes back to block 1540 and perform transmission again in block 1550.

Referring again to Fig. 15A, if, in block 1510, machine A is found to be not associated with the control module 140, machine B is invoked in block 1513. In block 1524, the control module 140 acquires axial information from machine B. In block 1535, the axial information is used to calculate angle using equation B which is associated with machine B. Because machine B may be different from machine A, equation B may be different from equation A. In addition, the equation A and the equation B are stored in an internal storage device of the control module 140 or in an external storage device of the control module 140. Then the calculated angle of machine B is stored in block 1540 and transmitted to the cloud-based application server 160 shown in Fig. 15B.

Referring to Fig. 15B, after receiving the angle information from the control module 140 of Fig. 15A in block 1560, the cloud-based application server 160 recognizes the control module in block 1562. In block 1570, when the user choose machine A for workout, he or she uses a smartphone to scan a QR code affixed to machine A. Then in block 1572, the user information is transmitted to the cloud-based application server 160. If the user is a registered customer in block 1565, the user's training program is received in block 1580. The user's training result and progress from the angle information is calculated in block 1585, and stored in block 1590. The user's training result and progress may also be provided for display in a local user interface device 172 (not shown in Fig. 15B).

Referring again to Fig. 15B, the cloud-based application server 160 recognizes the user in block 1574, and recognizes the exercise machine in block 1576. In block 1578, the prestored user's training information is retrieved for use in block 1580.

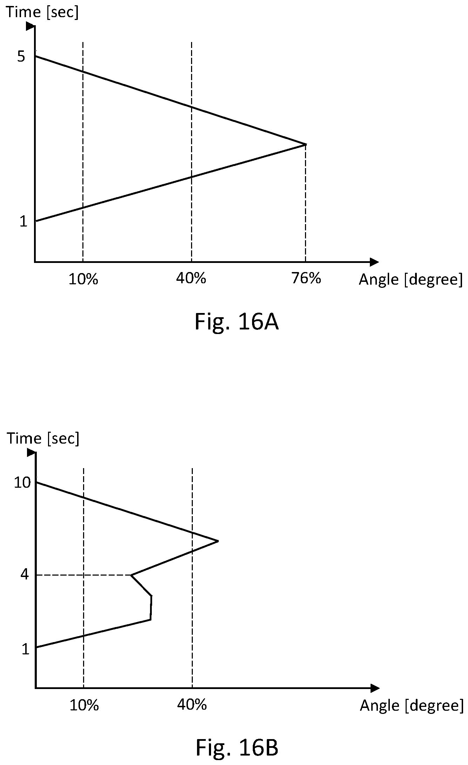

Figs. 16A-16D illustrate exemplary training results vs. training guidance. Referring to Fig. 16A, a horizontal axis represents measured angle in degrees executed by a user; and a vertical axis represents a recorded time in seconds. The user starts moving at 1 second and reaches 76% of a total range of motion, and then returns to starting point at 5 second. As an example, a training guidance sets minimum angle at 10% and maximum angle at 40% of the total range of motion. Therefore, Fig. 16A shows that the user have completed a repetition.

Referring to Fig. 16B, even though the user hesitates and drops the moving angle at around 4 second, he or she eventually reaches above the 40% of the total range of motion and returns to the starting point at 10 second. This case is still regarded as a repetition completed.

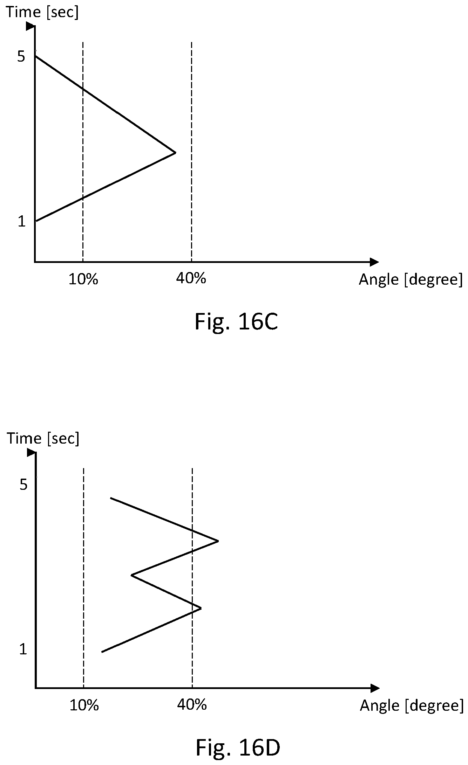

Referring to Fig. 16C, the user never reaches 40% of the total range of motion, therefore, this case is regarded as a repetition not completed.

Referring to Fig. 16D, even though the user reaches above the 40% of the total range of motion, he or she does not return to below 10% of the total range of motion. This case is also regarded as a repetition not completed.

## Claims

1.   A physical exercise system, comprising:

   a first sensor module (110, 110A, 110B) removably attached to a first moving part of a first exercise machine (1212, 1223), the first sensor module (110, 110A, 110B) being configured to detect movements by the first moving part and transmit detected data by a first communication connection; and
   a control module (140, 140A, 140B, 140C) being configured to receive the detected data, calculate a first movement value using the detected data and transmit the first movement value to a display device (172, 172A, 172B, 172C),
   **characterised in that** the control module (140, 140A, 140B, 140C) receives a start token from a cloud-based application server (160) to start detecting and calculating the first movement value, and the control module (140, 140A, 140B, 140C) transmits an idle token to the cloud-based application server (160) when there is no angle change being detected for a predetermined time period.

2.   The physical exercise system of claim 1, wherein the first sensor module (110, 110A, 110B) includes an accelerometer unit (131), a gyroscope unit (133) and a magnetometer unit (135), wherein the first movement value is an angle of rotation (217) or a speed range of the first moving part calculated using quaternion data transmitted from the first sensor module (110, 110A, 110B).

3.   The physical exercise system of any of claims 1 and 2, wherein the control module (140, 140A, 140B, 140C) is configured to estimate a speed range of a speed level of a motor driving the first moving part by selecting the speed level, and detect angular accelerations by the first sensor module (110, 110A, 110B) when the first moving part is adjusted to a beginning angle (211) and an end angle (214).

4. The physical exercise system of any of claims 1 to 3, wherein the control module (140, 140A, 140B, 140C) is configured to detect angular acceleration changes, calculate a sum of the angular acceleration changes for a predetermined time duration, calculate an average angular acceleration from the sum, and determine a motor speed level corresponding to a speed range associated with the average angular acceleration.

5. The physical exercise system of any of claims 1 to 4, wherein the control module (140, 140A, 140B, 140C) is configured to store a first range of motion of the first sensor module (110, 110A, 110B) and a first equation for calculating the first movement value.

6. The physical exercise system of any of claims 1 to 5 further comprising the cloud-based application server (160) and a user interface device (172, 172A, 172B, 172C), the cloud-based application server (160) remote to the first exercise machine (1212, 1223) and configured to receive the first movement value via a second communication connection, verify a user, produce data packets based on the first movement value and the verified user information, and transmit the data packets to the display device, the user interface device (172, 172A, 172B, 172C) including the display device, the user interface device (172, 172A, 172B, 172C) communicating with the cloud-based application server (160), wherein the exercise machine (1212, 1223) is affixed an identification code linked to the cloud-based application server (160), wherein the cloud-based application server (160) provides a first webpage accessible by the user, a second webpage accessible by a physical exercise instructor and a third webpage accessible by an operator of the first exercise machine (1212, 1223).

7. The physical exercise system of any of claims 1 to 6 further comprising a second sensor module (110, 110A, 110B) removably attached to a second moving part of the first exercise machine (1212, 1223), the second sensor module (110, 110A, 110B) being configured to detect movements by the second moving part and transmit the detected movements to the control module (140, 140A, 140B, 140C), wherein the control module (140, 140A, 140B, 140C) store a second range of motion of the second sensor module (110, 110A, 110B) and a second equation for calculating a second movement value from the detected movements of the second moving part, the second range of motion being different from the first range of motion and the second equation being different from the first equation.

8. The physical exercise system of any of claims 1 to 7 further comprising a third sensor module (110, 110A, 110B) removably attached to a third moving part of a second exercise machine (1212, 1223), the third sensor module (110, 110A, 110B) being configured to detect movements by the third moving part and transmit the detected movements to the control module (140, 140A, 140B, 140C).

9. A method for retrofitting exercise machines, the method comprising:

removably attaching a sensor module (110, 110A, 110B) to a moving part of an exercise machine (1212, 1223), the sensor module (110, 110A, 110B) being configured to detect movements of the moving part and transmit detected data by a first wireless communication connection;
placing a control module (140, 140A, 140B, 140C), the control module (140, 140A, 140B, 140C) being configured to receive the detected data through the first wireless communication connection, calculate an angle value (217) using the detected data and transmit the angle value (217) by a second wireless communication connection to a display device (172, 172A, 172B, 172C);
transmitting, by a cloud-based application server (160), a start token to the control module (140, 140A, 140B, 140C) to start detecting and calculating the angle value (217); and
transmitting an idle token to the cloud-based application server (160) by the control module (140, 140A, 140B, 140C) when there is no angle change being detected for a predetermined time period.

10. The method of claim 9 further comprising:
providing the cloud-based application server (160) remote to the exercise machine (1212, 1223), wherein the cloud-based application server (160) is configured to receive the angle value (217) via the second wireless communication connection, verify a user, produce data packets based on the angle value (217) and the verified user information and transmit the data packets to the display device (172, 172A, 172B, 172C).

11. The method of any of claims 9 and 10, further comprising:

selecting a speed level of a motor driving the moving part;
adjusting the moving part to a beginning angle (211);
detecting an angular acceleration by the sensor module (110, 110A, 110B);
adjusting the moving part to an end angle (214); and
estimating a speed range of the speed level.

12. The method of any of claims 9 to 11, further comprising:

detecting angular acceleration changes;
calculating a sum of the angular acceleration changes for a predetermined time duration;
calculating an average angular acceleration from the sum; and
determining a motor speed level corresponding to a speed range associated with the average angular acceleration.

13. The method of claim 12 further comprising:

comparing the angular acceleration changes with a predetermined threshold; and
ignoring the determined motor speed level when the angular acceleration change exceeds the predetermined threshold.

14. The method of any of claims 9 to 13, further comprising calibrating a range of motion of the sensor module (110, 110A, 110B) and storing the range of motion in either the control module (140, 140A, 140B, 140C) or the cloud-based application server (160).

15. The method of any of claims 9 to 14, further comprising
transmitting the start token to the control module (140, 140A, 140B, 140C) to start detecting and calculating the angle value (217) when the user is verified by the cloud-based application server (160) as a registered user;transmitting a stop token to the control module (140, 140A, 140B, 140C) by the cloud-based application server (160) after a plurality of angle changes being detected to meet a predetermined requirement stored in the cloud-based application server (160).

**Patentansprüche**

1. Körperliche-Betätigung-System, welches aufweist:

ein erstes Sensormodul (110, 110A, 110B), welches abnehmbar an einem ersten bewegbaren Teil einer ersten Betätigungsmaschine (1212, 1223) angebracht ist, wobei das erste Sensormodul (110, 110A, 110B) konfiguriert ist, um Bewegungen des ersten bewegbaren Teils zu erfassen und erfasste Daten durch eine erste Kommunikationsverbindung zu übertragen; und
ein Steuermodul (140, 140A, 140B, 140C), welches konfiguriert ist, um die erfassten Daten zu empfangen, einen ersten Bewegungswert unter Verwendung der erfassten Daten zu berechnen und den ersten Bewegungswert an eine Anzeigevorrichtung (172, 172A, 172B, 172C) zu übertragen,

**dadurch gekennzeichnet, dass** das Steuermodul (140, 140A, 140B, 140C) einen Start-Token von einem cloudbasierten Anwendungsserver (160) empfängt, um zu beginnen den ersten Bewegungswert zu erfassen und zu berechnen, und wobei das Steuermodul (140, 140A, 140B, 140C) ein Leerlauf-Token an den cloudbasierten Anwendungsserver (160) übermittelt, wenn für eine vorbestimmte Zeitdauer keine Winkeländerung erfasst wird.

2. Körperliche-Betätigung-System nach Anspruch 1, wobei das erste Sensormodul (110, 110A, 110B) eine Beschleunigungsmessereinheit (131), eine Gyroskopeinheit (133) und eine Magnetometereinheit (135) aufweist, wobei der erste Bewegungswert ein Drehwinkel (217) oder ein Geschwindigkeitsbereich des ersten bewegbaren Teils ist, welcher unter Verwendung von Quaternion-Daten berechnet wird, welche von dem ersten Sensormodul (110, 110A, 110B) übertragen werden.

3. Körperliche-Betätigung-System nach irgendeinem der Ansprüche 1 oder 2, wobei das Steuermodul (140, 140A, 140B, 140C) konfiguriert ist, um einen Geschwindigkeitsbereich eines Geschwindigkeitsniveaus eines Motors, der das erste bewegbare Teil antreibt, mittels Auswählens des Geschwindigkeitsniveaus zu schätzen und Winkelbeschleunigungen mittels des ersten Sensormoduls (110, 110A, 110B) zu erfassen, wenn das erste bewegbare Teil auf einen Anfangswinkel (211) und einen Endwinkel (214) eingestellt wird.

4. Körperliche-Betätigung-System nach irgendeinem der Ansprüche 1 bis 3, wobei das Steuermodul (140, 140A, 140B, 140C) konfiguriert ist, um Winkelbeschleunigungsänderungen zu erfassen, eine Summe der Winkelbeschleunigungsänderungen für eine vorbestimmte Zeitdauer zu berechnen, aus der Summe eine durchschnittliche Winkelbeschleunigung zu berechnen und ein Motordrehzahlniveau zu ermitteln, welches zu einem Geschwindigkeitsbereich korrespondiert, welcher mit der durchschnittlichen Winkelbeschleunigung verbunden ist.

5. Körperliche-Betätigung-System nach irgendeinem der Ansprüche 1 bis 4, wobei das Steuermodul (140, 140A, 140B, 140C) konfiguriert ist, um einen ersten Bewegungsbereich des ersten Sensormoduls (110, 110A, 110B) und eine erste Gleichung zu speichern zum Berechnen des ersten Bewegungswert.

6. Körperliche-Betätigung-System nach irgendeinem der Ansprüche 1 bis 5, welches ferner den cloudbasierten Anwendungsserver (160) und eine Benutzerschnittstellenvorrichtung (172, 172A, 172B, 172C) aufweist, wobei der cloudbasierte Anwendungsserver (160) von der ersten Betätigungsmaschine (1212, 1223) entfernt ist und konfiguriert ist, um den ersten Bewegungswert über eine zweite Kommunikationsverbindung zu empfangen, einen Benutzer zu verifizieren, Datenpakete basierend auf dem ersten Bewegungswert und der verifizierten Benutzerinformationen zu erzeugen und die Datenpakete an die Anzeigevorrichtung zu übertragen, wobei die Benutzerschnittstellenvorrichtung (172, 172A, 172B, 172C) die Anzeigevorrichtung aufweist, wobei die Benutzerschnittstellenvorrichtung (172, 172A, 172B, 172C) mit dem cloudbasierten Anwendungsserver (160) kommuniziert, wobei die Betätigungsmaschine (1212, 1223) mit einem Identifikationscode versehen ist, welcher mit dem cloudbasierten Anwendungsserver (160) verbunden ist, wobei der cloudbasierte Anwendungsserver (160) eine erste Webseite, auf die der Benutzer zugreifen kann, eine zweite Webseite, auf die ein Instrukteur zugreifen kann, und eine dritte Webseite, auf die ein Bediener der ersten Betätigungsmaschine (1212, 1223) zugreifen kann, bereitstellt.

7. Körperliche-Betätigung-System nach irgendeinem der Ansprüche 1 bis 6, welches ferner ein zweites Sensormodul (110, 110A, 110B) aufweist, das abnehmbar an einem zweiten bewegbaren Teil der ersten Betätigungsmaschine (1212, 1223) angebracht ist, wobei das zweite Sensormodul (110, 110A, HOB) konfiguriert ist, um Bewegungen des zweiten bewegbaren Teils zu erfassen und die erfassten Bewegungen an das Steuermodul (140, 140A, 140B, 140C) zu übertragen, wobei das Steuermodul (140, 140A, 140B, 140C) einen zweiten Bewegungsbereich des zweiten Sensormoduls (110, 110A, 110B) und eine zweite Gleichung zum Berechnen eines zweiten Bewegungswertes aus den erfassten Bewegungen des zweiten bewegbaren Teils speichert, wobei der zweite Bewegungsbereich von dem ersten Bewegungsbereich verschieden ist und die zweite Gleichung von der ersten Gleichung verschieden ist.

8. Körperliche-Betätigung-System nach irgendeinem der Ansprüche 1 bis 7, welches ferner ein drittes Sensormodul (110, 110A, 110B) aufweist, welches abnehmbar an einem dritten bewegbaren Teil einer zweiten Betätigungsmaschine (1212, 1223) angebracht ist, wobei das dritte Sensormodul (110, 110A, HOB) konfiguriert ist, um Bewegungen des dritten bewegbaren Teils zu erfassen und die erfassten Bewegungen an das Steuermodul (140, 140A, 140B, 140C) zu übermitteln.

9. Verfahren zum Nachrüsten von Betätigungsmaschinen, wobei das Verfahren aufweist:

abnehmbares Anbringen eines Sensormoduls (110, 110A, 110B) an einem bewegbaren Teil einer Betätigungsmaschine (1212, 1223), wobei das Sensormodul (110, 110A, 110B) konfiguriert ist, um Bewegungen des bewegbaren Teils zu erfassen und erfasste Daten über eine erste drahtlose Kommunikationsverbindung zu übertragen;
Platzieren eines Steuermoduls (140, 140A, 140B, 140C), wobei das Steuermodul (140, 140A, 140B, 140C) konfiguriert ist, um die erfassten Daten über die erste drahtlose Kommunikationsverbindung zu empfangen, einen Winkelwert (217) unter Verwendung der erfassten Daten zu berechnen und den Winkelwert (217) über eine zweite drahtlose Kommunikationsverbindung an eine Anzeigevorrichtung (172, 172A, 172B, 172C) zu übertragen;
Übertragen eines Start-Tokens mittels eines cloudbasierten Anwendungsservers (160) an das Steuermodul (140, 140A, 140B, 140C), um anzufangen, den Winkelwert (217) zu erfassen und zu berechnen; und
Übertragen eines Leerlauf-Tokens an den cloudbasierten Anwendungsserver (160) mittels des Steuermoduls (140, 140A, 140B, 140C), wenn für eine vorbestimmte Zeitspanne keine Winkeländerung erfasst wird.

**10.** Verfahren nach Anspruch 9, welches ferner aufweist:
Bereitstellen des cloudbasierten Anwendungsservers (160) entfernt von der Betätigungsmaschine (1212, 1223), wobei der cloudbasierte Anwendungsserver (160) konfiguriert ist, um den Winkelwert (217) über die zweite drahtlose Kommunikationsverbindung zu empfangen, einen Benutzer zu verifizieren, Datenpakete basierend auf dem Winkelwert (217) und der verifizierten Benutzerinformationen zu erzeugen und die Datenpakete an die Anzeigevorrichtung (172, 172A, 172B, 172C) zu übertragen.

**11.** Verfahren nach irgendeinem der Ansprüche 9 oder 10, welches ferner aufweist:

Auswählen eines Geschwindigkeitsniveaus eines Motors, der das bewegbare Teil antreibt;
Einstellen des bewegbaren Teils auf einen Anfangswinkel (211);
Erfassen einer Winkelbeschleunigung durch das Sensormodul (110, 110A, 110B);
Einstellen des bewegbaren Teils auf einen Endwinkel (214); und
Schätzen eines Geschwindigkeitsbereichs des Geschwindigkeitsniveaus.

**12.** Verfahren nach irgendeinem der Ansprüche 9 bis 11 umfasst ferner:

Erfassen von Winkelbeschleunigungsänderungen;
Berechnen einer Summe der Winkelbeschleunigungsänderungen für eine vorbestimmte Zeitdauer;
Berechnen einer durchschnittlichen Winkelbeschleunigung aus der Summe; und
Ermitteln eines Motordrehzahlniveaus, welches mit einem Geschwindigkeitsbereich korrespondiert, welcher mit der durchschnittlichen Winkelbeschleunigung verbundenen ist.

**13.** Verfahren nach Anspruch 12, welches ferner aufweist:

Vergleichen der Winkelbeschleunigungsänderungen mit einem vorbestimmten Schwellenwert; und
Ignorieren des ermittelten Motordrehzahlniveaus, wenn die Winkelbeschleunigungsänderung den vorbestimmten Schwellenwert überschreitet.

**14.** Verfahren nach irgendeinem der Ansprüche 9 bis 13, welches ferner Kalibrieren eines Bewegungsbereichs des Sensormoduls (110, 110A, 110B) und Speichern des Bewegungsbereichs entweder im Steuermodul (140, 140A, 140B, 140C) oder im cloudbasierten Anwendungsserver (160) aufweist.

**15.** Verfahren nach irgendeinem der Ansprüche 9 bis 14, welches ferner aufweist
Übertragen des Start-Tokens an das Steuermodul (140, 140A, 140B, 140C), um anzufangen den Winkelwert (217) zu erfassen und zu berechnen, wenn der Benutzer durch den cloudbasierten Anwendungsserver (160) als ein registrierter Benutzer verifiziert ist / wird; Übertragen eines Stopp-Tokens an das Steuermodul (140, 140A, 140B, 140C) über den cloudbasierten Anwendungsserver (160) nachdem mehrere Winkeländerungen erfasst wurden, um eine vorbestimmte Anforderung zu erfüllen, die in dem cloudbasierten Anwendungsserver (160) gespeichert ist.

**Revendications**

**1.** Système d'exercice physique, comprenant :

un premier module de capteur (110, 110A, 110B) fixé de manière amovible à une première partie mobile d'une première machine d'exercice (1212,1223), le premier module de capteur (110, 110A, 110B) étant configuré pour détecter des mouvements par la première partie mobile et transmettre des données détectées par une première connexion de communication ; et
un module de commande (140, 140A, 140B, 140C) configuré pour recevoir les données détectées, calculer une première valeur de mouvement en utilisant les données détectées et transmettre la première valeur de mouvement à un dispositif d'affichage (172, 172A, 172B, 172C),
**caractérisé en ce que** le module de commande (140, 140A, 140B, 140C) reçoit un jeton de démarrage d'un serveur d'application à base de nuage (160) pour commencer à détecter et à calculer la première valeur de mouvement, et le module de commande (140, 140A, 140B, 140C) transmet un jeton d'inactivité au serveur d'application à base de nuage (160) lorsqu'aucun changement d'angle n'est détecté pendant une période de temps prédéterminée.

**2.** Système d'exercice physique selon la revendication 1, dans lequel le premier module de capteur (110, 110A, 110B) comprend une unité d'accéléromètre (131), une unité de gyroscope (133) et une unité de magnétomètre (135), dans lequel la première valeur de mouvement est un angle de rotation (217) ou une plage de vitesse de la première partie mobile calculée en utilisant des données de quaternion transmises depuis le premier module de capteur (110, 110A, 110B) .

**3.** Système d'exercice physique selon l'une quelconque des revendications 1 et 2, dans lequel le module de commande (140, 140A, 140B, 140C) est configuré pour estimer une plage de vitesse d'un niveau de vitesse d'un moteur entraînant la première partie mobile en sélectionnant le niveau de vitesse, et détecter des accélérations angulaires par le premier module de capteur (110, 110A, 110B) lorsque la première partie mobile est ajustée à un angle de début (211) et à un angle de fin (214).

**4.** Système d'exercice physique selon l'une quelconque des revendications 1 à 3, dans lequel le module de commande (140, 140A, 140B, 140C) est configuré pour détecter des changements d'accélération angulaire, calculer une somme des changements d'accélération angulaire pour une durée de temps prédéterminée, calculer une accélération angulaire moyenne à partir de la somme, et déterminer un niveau de vitesse de moteur correspondant à une plage de vitesse associée à l'accélération angulaire moyenne.

**5.** Système d'exercice physique selon l'une quelconque des revendications 1 à 4, dans lequel le module de commande (140, 140A, 140B, 140C) est configuré pour mémoriser une première plage de mouvement du premier module de capteur (110, 110A, 110B) et une première équation de calcul de la première valeur de mouvement.

**6.** Système d'exercice physique selon l'une quelconque des revendications 1 à 5, comprenant en outre le serveur d'application à base de nuage (160) et un dispositif d'interface utilisateur (172, 172A, 172B, 172C), le serveur d'application à base de nuage (160) distant de la première machine d'exercice (1212,1223) et configuré pour recevoir la première valeur de mouvement via une deuxième connexion de communication, vérifier un utilisateur, produire des paquets de données sur la base de la première valeur de mouvement et des informations d'utilisateur vérifié, et transmettre les paquets de données au dispositif d'affichage, le dispositif d'interface utilisateur (172, 172A, 172B, 172C) comprenant le dispositif d'affichage, le dispositif d'interface utilisateur (172, 172A, 172B, 172C) communiquant avec le serveur d'application à base de nuage (160), la machine d'exercice (1212, 1223) étant affublée d'un code d'identification lié au serveur d'application à base de nuage (160), le serveur d'application à base de nuage (160) fournissant une première page Web accessible par l'utilisateur, une deuxième page Web accessible par un instructeur d'exercice physique et une troisième page Web accessible par un opérateur de la première machine d'exercice (1212, 1223).

**7.** Système d'exercice physique selon l'une quelconque des revendications 1 à 6, comprenant en outre un deuxième module de capteur (110, 110A, 110B) fixé de manière amovible à une deuxième partie mobile de la première machine d'exercice (1212,1223), le deuxième module de capteur (110, 110A, 110B) étant configuré pour détecter des mouvements par la deuxième partie mobile et transmettre les mouvements détectés au module de commande (140, 140A, 140B, 140C), le module de commande (140, 140A, 140B, 140C) stockant une deuxième plage de mouvement du deuxième module de capteur (110, 110A, 110B) et une deuxième équation de calcul d'une deuxième valeur de mouvement à partir des mouvements détectés de la deuxième partie mobile, la deuxième plage de mouvement étant différente de la première plage de mouvement et la deuxième équation étant différente de la première équation.

**8.** Système d'exercice physique selon l'une quelconque des revendications 1 à 7, comprenant en outre un troisième module de capteur (110, 110A, 110B) fixé de manière amovible à une troisième partie mobile d'une deuxième machine d'exercice (1212, 1223), le troisième module de capteur (110, 110A, 110B) étant configuré pour détecter des mouvements par la troisième partie mobile et transmettre les mouvements détectés au module de commande (140, 140A, 140B, 140C).

**9.** Procédé pour rééquiper des machines d'exercice, le procédé comprenant :

fixer de manière amovible un module de capteur (110, 110A, 110B) à une partie mobile d'une machine d'exercice (1212, 1223), le module de capteur (110, 110A, 110B) étant configuré pour détecter des mouvements de la partie mobile et transmettre des données détectées par une première connexion de communication sans fil ;
placer un module de commande (140, 140A, 140B, 140C), le module de commande (140, 140A, 140B, 140C) étant configuré pour recevoir les données détectées par la première connexion de communication sans fil, calculer une valeur d'angle (217) en utilisant les données détectées et transmettre la valeur d'angle (217) par une deuxième connexion de communication sans fil à un dispositif d'affichage (172, 172A, 172B, 172C) ;

transmettre, par un serveur d'application à base de nuage (160), un jeton de démarrage au module de commande (140, 140A, 140B, 140C) pour commencer à détecter et à calculer la valeur d'angle (217) ; et

transmettre un jeton d'inactivité au serveur d'application à base de nuage (160) par le module de commande (140, 140A, 140B, 140C) lorsqu'aucun changement d'angle n'est détecté pendant une période de temps prédéterminée.

10. Procédé selon la revendication 9, comprenant en outre :

fournir le serveur d'application à base de nuage (160) distant de la machine d'exercice (1212, 1223), dans lequel le serveur d'application à base de nuage (160) est configuré pour recevoir la valeur d'angle (217) via la deuxième connexion de communication sans fil, vérifier un utilisateur, produire des paquets de données à base de la valeur d'angle (217) et des informations d'utilisateur vérifié et transmettre les paquets de données au dispositif d'affichage (172, 172A, 172B, 172C).

11. Procédé selon l'une quelconque des revendications 9 et 10, comprenant en outre :

la sélection d'un niveau de vitesse d'un moteur entraînant la partie mobile ;
l'ajustement de la partie mobile à un angle de début (211) ;
la détection d'une accélération angulaire par le module de capteur (110, 110A, 110B) ;
l'ajustement de la partie mobile à un angle de fin (214) ; et
l'estimation d'une plage de vitesse du niveau de vitesse.

12. Procédé selon l'une quelconque des revendications 9 à 11, comprenant en outre :

la détection de changements d'accélération angulaire ;
le calcul d'une somme des changements d'accélération angulaire pour une durée de temps prédéterminée ;
le calcul d'une accélération angulaire moyenne à partir de la somme ; et
la détermination d'un niveau de vitesse de moteur correspondant à une plage de vitesse associée à l'accélération angulaire moyenne.

13. Procédé selon la revendication 12, comprenant en outre :

comparer les changements d'accélération angulaire à un seuil prédéterminé ; et
ignorer le niveau de vitesse de moteur déterminé lorsque le changement d'accélération angulaire dépasse le seuil prédéterminé.

14. Procédé selon l'une quelconque des revendications 9 à 13, comprenant en outre l'étalonnage d'une plage de mouvement du module de capteur (110, 110A, 110B) et le stockage de la plage de mouvement dans le module de commande (140, 140A, 140B, 140C) ou le serveur d'application à base de nuage (160) .

15. Procédé selon l'une quelconque des revendications 9 à 14, comprenant en outre :
la transmission du jeton de démarrage au module de commande (140, 140A, 140B, 140C) pour commencer à détecter et à calculer la valeur d'angle (217) lorsque l'utilisateur est vérifié par le serveur d'application à base de nuage (160) en tant qu'utilisateur enregistré ; la transmission d'un jeton d'arrêt au module de commande (140, 140A, 140B, 140C) par le serveur d'application à base de nuage (160) après une pluralité de changements d'angle étant détectés pour répondre à une exigence prédéterminée stockée dans le serveur d'application à base de nuage (160).

110

112

122

Processing unit → Wireless Transmission module

Accelero-meter

Gyroscope

Magneto-meter

131

133

135

152

155

Bluetooth module

Wi-Fi module

160

Cloud-based application server

145

Processing unit (Motion calculation)

140

178

User terminals

Local user interface devices

172

Fig. 1

202

Angle
estimation
algorithm

Beginning angle of
the rotation — 211

End angle of the
rotation — 214

Rotation angle — 217

## Fig. 2

Detect current angle change — 310

320

Is there an
angle change?

No

Yes

330 — Accumulate current
angle change

No

360

No change for
more than 1
sec?

340 — Calculate percentage
of completion

350 — Output current angle

370

Yes

Calculate and output
a completion angle

## Fig. 3

Fig. 4A

Fig. 4B

Fig. 4C

Fig. 5

610 — User logs in by using a smartphone to scan a QR code on the exercise machine

620 — Transmit a start token to an associated control module to start detecting and transmitting training data

630 — Transmit the user's training program to the control module

640 — Detect angle changes by the sensor module

650 — No angle change for a predetermined time?

Yes

665 — Transmit an idle token to the cloud-based application server

No

660 — Compare training data with the training program and provide real-time feedback to the user

670 — Upload training data to the cloud in an account associated with the user

680 — Training program completed?

Yes          No

690 — Return a stop token to the control module to stop detecting training data

Fig. 6

```
Select an exercise machine          ⌐ 710

Select a sensor module
attached to the exercise            ⌐ 720
machine for calibration

Move the machine part to a
beginning position and              ⌐ 730
detect an angle

Move the machine part to
an end position and detect          ⌐ 740
an angle

                  750
Local    Where to    Cloud
         store the
         calibration
         data?

760                          770
Store the beginning      Store the beginning
and end angle in a       and end angle in a
local controller         cloud-based storage
```

Fig. 7

Inspect packets transmitted
from the sensor module — 810

Received sensor
packet? — 820

No

Yes

Parse the received packets — 830

Obtain quaternion data
(w, x, y, z) — 840

Calculate an angle offset
from the (w, x, y, z) data — 850

Output the angle offset — 860

Fig. 8

Select an exercise machine ⟋ 910

↓

Select a motor speed level ⟋ 920

↓

Adjust the moving part to the beginning angle ⟋ 930

↓

Detect angular acceleration ⟋ 940

↓

Adjust the moving part to the end angle ⟋ 950

↓

All the motor speed level being calibrated? ⟋ 960

No

Yes

Estimate a speed range of each motor speed level ⟋ 970

↓

Output the estimation result ⟋ 980

Fig. 9

```
┌─────────────────────────┐
│   Start a workout session on │  ⟋ 1010
│      an exercise machine     │
└─────────────────────────┘
             │
             ▼
┌─────────────────────────┐
│      Receive angular         │  ⟋ 1020
│  acceleration data from the  │
│       sensor module          │
└─────────────────────────┘
             │
             ▼
┌─────────────────────────┐
│   Detect angular acceleration│  ⟋ 1030
│   changes and calculate a    │
│   sum for a predetermined    │
│       time duration          │
└─────────────────────────┘
```

Is the sum larger than n degree? — 1040

No → Start rotation? — 1050 — No

Yes

1043 — Start rotation

1047 — Record angular acceleration

Yes

Detect motor speed — 1060

Determine an average angular acceleration belonging to a speed range — 1070

Output a motor speed level corresponding to the speed range — 1080

Fig. 10

23

Fig. 11

Fig. 12

160

Cloud-based application server

Control module —140C

Training info

1212

110A

1223

TV

110B

BLE

140A — Control module

172C

BLE

Control module —140B

Measurement data

Measurement data

Fig. 13

160

Cloud-based application server

Control module ⌐140C

Training info

1212

110A

TV

1223

110B

BLE

172C

BLE

140A

Control module

Measurement data

Fig. 14

Fig. 15A

Machine A transmission — 1502

BLE

1505

Is machine A within range?

No → Do not receive data 1508

Yes

1510

Is machine A associated?

No → Invoke machine B 1513

Yes

1520 — Acquire axial information from machine A

1524 — Acquire axial information from machine B

1530 — Calculate angle using equation A

1535 — Calculate angle using equation B

Store the information — 1540

Transmit the information — 1550 → To the cloud-based application server (Fig. 15B)

1553 Transmit successfully?

No

Yes

Delete the information — 1556

Control module 140

## Fig. 15B

```
                                              ┌──────────────┐
                                              │   User's     │
                                              │  smartphone  │
                                   1570──     │ scan the QR  │
                                              │    code      │
                                              └──────┬───────┘
                                                     │
                                              ┌──────▼───────┐
                                   1572──     │ Transmit the │
                                              │    user      │
                                              │ information  │
                                              └──────┬───────┘
```

┌ ─ ─ ─ ─ ─ ─ ─ ─ ─ ─ ─ ─ ─ ─ ─ ─ ─ ─ ─ ─ ─ ─ ─ ─ ─ ─ ─ ─ ┐

  1560──          ┌────────────────────────┐      1574
→──────────────→  │ Receive the information │              ┌──────────────┐
  From the        └───────────┬────────────┘              │  Recognize   │
 control module               │                           │   the user   │
 (Fig. 15A)       ┌───────────▼────────────┐              └──────┬───────┘
                  │  Recognize the control │      1576            │
                  │        module          │              ┌──────▼───────┐
   1562──         └───────────┬────────────┘              │  Recognize   │
                              │         1565               │  the machine │
                     ◇────────▼────────◇                   └──────┬───────┘
                    ╱  Is the user a     ╲     1578               │
                    ◇    registered       ◇────────────←   ┌──────▼───────┐
                    ╲    customer?       ╱                 │   Retrieve   │
                     ◇────────┬────────◇                   │    user's    │
                              │ Yes                        │   training   │
   1580──         ┌───────────▼────────────┐               │  information │
                  │  Receive the user's    │←──────────    └──────────────┘
                  │   training program     │
                  └───────────┬────────────┘               Cloud-based
                              │                           application server
   1585──         ┌───────────▼────────────┐                    160
                  │  Calculate the user's  │
                  │  training result and   │
                  │       progress         │
                  └───────────┬────────────┘
                              │──────────────────────→
                              │                      To display
   1590──         ┌───────────▼────────────┐
                  │  Store the information  │
                  └─────────────────────────┘

└ ─ ─ ─ ─ ─ ─ ─ ─ ─ ─ ─ ─ ─ ─ ─ ─ ─ ─ ─ ─ ─ ─ ─ ─ ─ ─ ─ ─ ┘

Fig. 16A

Fig. 16B

Time [sec]

5

1

10%    40%

Angle [degree]

Fig. 16C

Time [sec]

5

1

10%    40%

Angle [degree]

Fig. 16D

**REFERENCES CITED IN THE DESCRIPTION**

**Patent documents cited in the description**

- US 9414784 B1